# EUROPEAN PATENT APPLICATION

(11) **EP 1 617 101 A1**
(43) Date of publication of application: **18.01.2006**
(21) Application number: 04016781.9
(22) Date of filing: 16.07.2004
(51) Int. Cl.: F16G 13/02

(54) **Lightweight drive chain**

(71) Applicant: Kmc Chain Industrial Co., Ltd., Hsin Hua Town, Tainan Hsien (TW)
(72) Inventor: Wu, Daniel, Tainan City (TW)
(74) Representative: Jones, Ithel Rhys

(57) **Abstract**

A lightweight drive chain (2) includes a plurality of parallel pairs of outer chain plates (3) and a plurality of parallel pairs of inner chain plates (4) . Each of the outer chain plates (3) further has a pair of first weight-reducing slots (36), each of which extends radially from a first hole periphery (351) of a respective one of first pin holes (35) in each of the outer chain plates (3) . The first weight-reducing slots (36) are not in spatial communication with each other. Each of the inner chain plates (4) further has a second weight-reducing slot (46) disposed between second pin holes (45) in each of the inner chain plates (4).

## Description

The invention relates to a drive chain, more particularly to a lightweight drive chain.

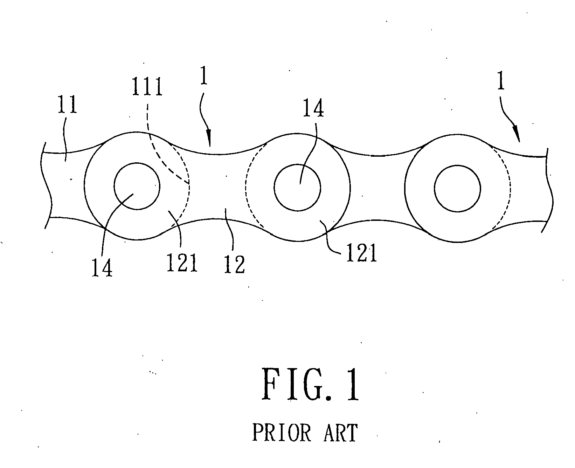

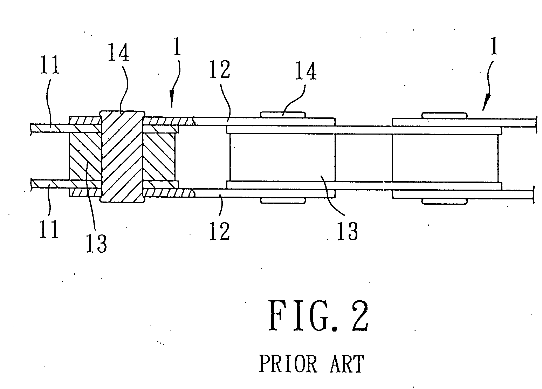

Referring to Figures 1 and 2, a conventional drive chain 1 includes a plurality of parallel pairs of inner chain plates 11, a plurality of parallel pairs of outer chain plates 12, a plurality of pins 14, and a plurality of tubular rollers 13. Each pair of the inner chain plates 11 is disposed between two adjacent pairs of the outer chain plates 12. Each of the inner chain plates 11 has a pair of inner end portions 111 spaced apart from each other, and each of the outer chain plates 12 has a pair of outer end portions 121 spaced apart from each other. The pins 14 connect the inner chain plates 11 to the outer chain plates 12 by passing through the inner end portions 111 and the corresponding outer end portions 121.

It is desirable to reduce the overall weight of the drive chain for efficient use of power without sacrificing the structural integrity of the drive chain. Furthermore, it is desirable to reduce the contact areas of the inner and outer chain plates 11, 12 to avoid dirt accumulation therebetween, which can result in abrading of the inner and outer chain plates 11, 12 that can lead to a shorter service life for the drive chain 1.

Therefore, the object of the present invention is to provide a drive chain, which is relatively lightweight as compared to the conventional drive chain.

Accordingly, the lightweight drive chain of this invention includes a plurality of parallel pairs of outer chain plates, a plurality of parallel pairs of inner chain plates, and a plurality of pins.

Each pair of the inner chain plates is disposed between two adjacent pairs of the outer chain plates. The pins connect the inner chain plates to the outer chain plates.

Each of the outer chain plates has a first inner surface, a first outer surface opposite to the first inner surface, a pair of first end portions spaced apart from each other along a first longitudinal axis, a first connecting portion interconnecting the first end portions along the first longitudinal axis, and a pair of first pin holes that are formed respectively in the first end portions and that extend through the first inner and outer surfaces. Each of the first pin holes is defined by a first hole periphery.

Each of the inner chain plates has a second outer surface, a second inner surface opposite to the second outer surface, a pair of second end portions spaced apart from each other along a second longitudinal axis, a second connecting portion interconnecting the second end portions, and a pair of second pin holes that are formed respectively in the second end portions and that extend through the second inner and outer surfaces.

Each of the outer chain plates further has a pair of first weight-reducing slots, each of which extends radially from the first hole periphery of a respective one of the first pin holes. The first weight-reducing slots are not in spatial communication with each other.

Each of the inner chain plates further has a second weight-reducing slot disposed between the second pin holes.

Other features and advantages of the present invention will become apparent in the following detailed description of the preferred embodiment with reference to the accompanying drawings, of which:
Figure 1 is a fragmentary side view of a conventional drive chain;
Figure 2 is a fragmentary partly cross-sectional schematic view of the conventional drive chain;
Figure 3 is a fragmentary side view of the preferred embodiment of the lightweight drive chain according to this invention;
Figure 4 is a fragmentary cross-sectional schematic view of the preferred embodiment;
Figure 5 is a side view of an outer chain plate used in the preferred embodiment;
Figure 6 is a sectional view of the outer chain plate taken along line 6-6 of Figure 5; and
Figure 7 is a side view of an inner chain plate used in the preferred embodiment.

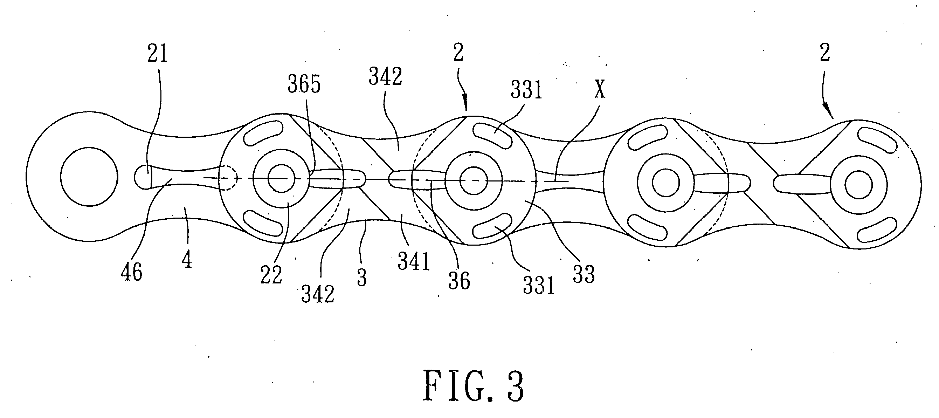

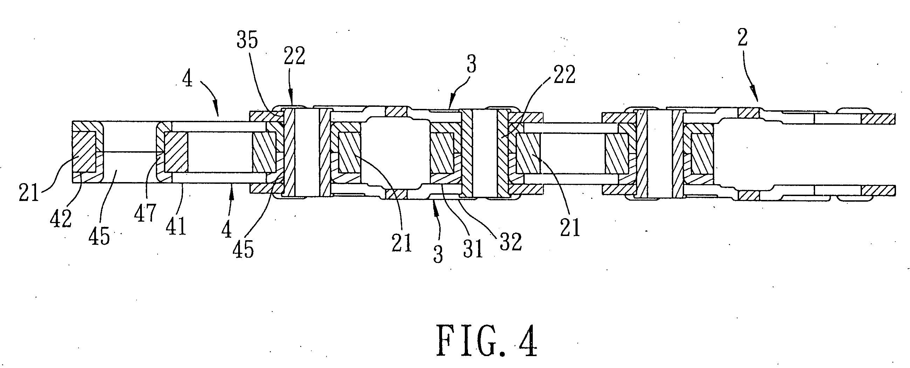

Referring to Figures 3 and 4, the preferred embodiment of the lightweight drive chain 2 according to this invention is shown to include a plurality of parallel pairs of outer chain plates 3, a plurality of parallel pairs of inner chain plates 4, a plurality of pins 22, and a plurality of tubular rollers 21. Each pair of the inner chain plates 4 is disposed between two adjacent pairs of the outer chain plates 3. The pins 22 connect the inner chain plates 4 to the outer chain plates 3. Each of the pins 22 is tubular in this embodiment.

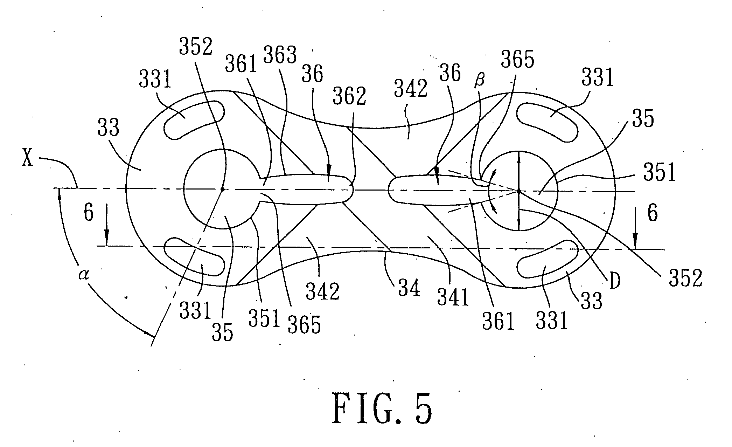

Referring to Figures 4, 5, and 6, each of the outer chain plates 3 is made of metal, and has a first inner surface 31, a first outer surface 32 opposite to the first inner surface 31, a pair of first end portions 33 spaced apart from each other along a first longitudinal axis (X), a first connecting portion 34 interconnecting the first end portions 33 along the first longitudinal axis (X), and a pair of first pin holes 35 that are formed respectively in the first end portions 33 and that extend through the first inner and outer surfaces 31, 32. Each of the first pin holes 35 is defined by a first hole periphery 351. Each of the outer chain plates 3 further has a pair of first weight-reducing slots 36, each of which extends radially from the first hole periphery 351 of a respective one of the first pin holes 35. Preferably, each of the first weight-reducing slots 36 extends along the first longitudinal axis (X) toward the first connecting portion 34. The first weight-reducing slots 36 are not in spatial communication with each other so as not to weaken undesirably the outer chain plates 3.

In this embodiment, each of the first weight-reducing slots 36 has an open end portion 361 at the first hole periphery 351 of the respective one of the first pin holes 35, a closed end portion 362 opposite to the open end portion 361, and an intermediate expanded portion 363 between the open and closed end portions 361,362. Each of the first weight-reducing slots 36 has a width that is reduced from the intermediate expanded portion 363 to each of the open and closed end portions 361,362. The open end portion 361 has an opening 365 smaller than a diameter (D) of the respective one of the first pin holes 35 and smaller than a largest width at the intermediate expanded portion 363. Each of the first pin holes 35 has a center 352. The opening 365 of the open end portion 361 of each of the first weight-reducing slots 36 defines an angle (β) ranging from 30 to 60 degrees with respect to the center 352 of the respective one of the first pin holes 35.

Each of the first end portions 33 is formed with two reinforcing ribs 331 that protrude from the first outer surface 32, that are radially offset from the first pin hole 35, and that are disposed on opposite sides of the first longitudinal axis (X). Each of the reinforcing ribs 331 forms an acute angle (α) with respect to the first longitudinal axis (X). Preferably, the acute angle is 45 degrees. The reinforcing ribs 331 are formed by punching at the first inner surface 31 such that the first inner surface 31 is formed with recesses 332 corresponding to the reinforcing ribs 331.

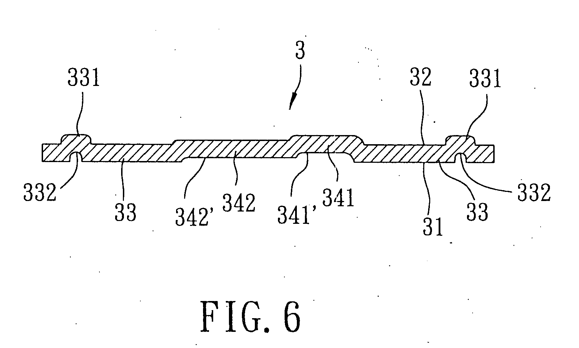

Preferably, the first connecting portion 34 is formed with an inclined primary reinforcing ridge 341 that protrudes from the first outer surface 32 and that is inclined with respect to the first longitudinal axis (X). The primary reinforcing ridge 341 is formed by punching at the first inner surface 31 such that the first inner surface 31 is formed with a primary groove 341' corresponding to the primary reinforcing ridge 341. The first connecting portion 34 is further formed with an inclined secondary reinforcing ridge 342 that crosses the primary reinforcing ridge 341 and that protrudes from the first outer surface 32 at a distance less than that of the primary reinforcing ridge 341 as best shown in Figure 6. The secondary reinforcing ridge 342 is likewise formed by punching at the first inner surface 31 such that the first inner surface 31 is formed with a secondary groove 342' corresponding to the secondary reinforcing ridge 342.

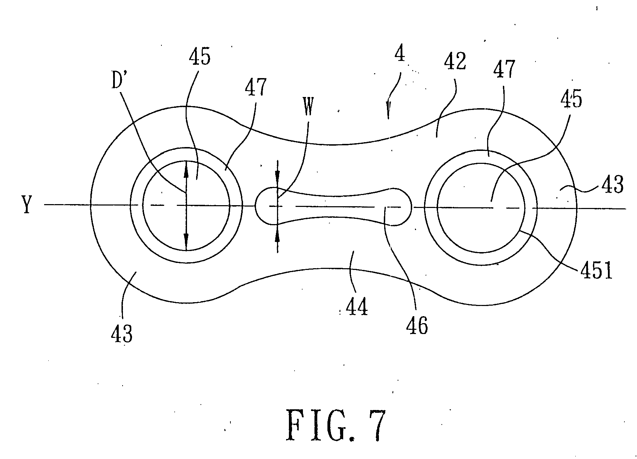

Referring to Figures 4 and 7, each of the inner chain plates 4 has a second outer surface 41, a second inner surface 42 opposite to the second outer surface 41, a pair of second end portions 43 spaced apart from each other along a second longitudinal axis (Y), a second connecting portion 44 interconnecting the second end portions 43, and a pair of second pin holes 45 that are formed respectively in the second end portions 43 and that extend through the second inner and outer surfaces 42,41. Each of the inner chain plates 4 further has a second weight-reducing slot 46 disposed between the second pin holes 45. The second weight-reducing slot 46 is formed in the second connecting portion 44, extends along the second longitudinal axis (Y), and is not in spatial communication with either of the second pin holes 45 so as not to weaken undesirably the inner chain plates 4. The maximum width (W) of the second weight-reducing slot 46 is smaller than a diameter (D') of each of the second pin holes 45.

Each of the second pin holes 45 is defined by a second hole periphery 451. Each of the inner chain plates 4 further has a pair of annular flanges 47 protruding from the second inner surface 42 at the second hole periphery 451 of a respective one of the second pin holes 45.

Each of the tubular rollers 21 is sleeved rotatably on a confronting pair of the annular flanges 47 of a corresponding parallel pair of the inner chain plates 4.

In view of the aforesaid, the following effects can by achieved by the lightweight drive chain of this invention:
1). Each of the outer chain plates 3 is formed with a pair of the first weight-reducing slots 36. Each of the inner chain plates 4 is formed with the second weight-reducing slot 46. Each of the pins 22 is tubular. Therefore, the overall weight of the drive chain 2 of this invention can be substantially reduced as compared to the conventional drive chain 1.
2) Each of the first end portions 33 of each of the outer chain plates 3 is formed with two reinforcing ribs 331. The first connecting portion 34 of each of the outer chain plates 3 is formed with the primary and secondary reinforcing ridges 341,342. Furthermore, the reinforcing ribs 331 are formed at positions where breaking of a conventional outer chain plate are likely to occur. Therefore, the structural strength of each of the outer chain plates 3 can be reinforced.
3) Although each of the first weight-reducing slots 36 is in spatial communication with a corresponding one of the first pin holes 35, the opening 365 of the open end portion 361 of each of the first weight-reducing slots 36 defines the angle (β) ranging from 30 to 60 degrees, which can prevent each of the pins 22 from moving into a corresponding one of the first weight-reducing slots 36.
4) The overlapping area between the first end portions 33 of the outer chain plates 3 and the adjacent second end portions 43 of the inner chain plates 4 is reduced, thereby minimizing dirt accumulation therebetween.
5) Each of the tubular rollers 21 is sleeved rotatably on a confronting pair of the annular flanges 47 of a corresponding parallel pair of the inner chain plates 4, which further reinforces the structural strength of the drive chain 2.

## Claims

1. A lightweight drive chain (2) including:
a plurality of parallel pairs of outer chain plates (3);
a plurality of parallel pairs of inner chain plates (4), each pair of said inner chain plates (4) being disposed between two adjacent pairs of said outer chain plates (3); and
a plurality of pins (22) connecting said inner chain plates (4) to said outer chain plates (3);
each of said outer chain plates (3) having a first inner surface (31), a first outer surface (32) opposite to said first inner surface (31), a pair of first end portions (33) spaced apart from each other along a first longitudinal axis (X), a first connecting portion (34) interconnecting said first end portions (33) along the first longitudinal axis (X), and a pair of first pin holes (35) that are formed respectively in said first end portions (33) and that extend through said first inner and outer surfaces (31,32), each of said first pin holes (35) being defined by a first hole periphery (351) ;
each of said inner chain plates (4) having a second outer surface (41), a second inner surface (42) opposite to said second outer surface (41), a pair of second end portions (43) spaced apart from each other along a second longitudinal axis (Y), a second connecting portion (44) interconnecting said second end portions (43), and a pair of second pin holes (45) that are formed respectively in said second end portions (43) and that extend through said second inner and outer surfaces (42,41);
**characterized in that** each of said outer chain plates (3) further has a pair of first weight-reducing slots (36), each of which extends radially from said first hole periphery (351) of a respective one of said first pin holes (35), said first weight-reducing slots (36) not being in spatial communication with each other; and
each of said inner chain plates (4) further having a second weight-reducing slot (46) disposed between said second pin holes (45).

2. The lightweight drive chain as claimed in Claim 1, **characterized in that** each of said first weight-reducing slots (36) has an open end portion (361) at said first hole periphery (351) of the respective one of said first pin holes (35), a closed end portion (362) opposite to said open end portion (361), and an intermediate expanded portion (363) between said open and closed end portions (361, 362), each of said first weight-reducing slots (36) having a width that is reduced from said intermediate expanded portion (363) to each of said open and closed end portions (361,362), said open end portion (361) having an opening (365) smaller than a diameter (D) of the respective one of said first pin holes (35) and smaller than a largest width at said intermediate expanded portion (363).

3. The lightweight drive chain as claimed in Claim 2, **characterized in that** each of said first pin holes (35) has a center (352), said opening (365) of said open end portion (361) of each of said first weight-reducing slots (36) defining an angle (β) ranging from 30 to 60 degrees with respect to said center (352) of the respective one of said first pin holes (35).

4. The lightweight drive chain as claimed in Claim 1, **characterized in that** each of said first weight-reducing slots (36) extends along the first longitudinal axis (X) toward said first connecting portion (34).

5. The lightweight drive chain as claimed in Claim 1, **characterized in that** said second weight-reducing slot (46) is formed in said second connecting portion (44), extends along said second longitudinal axis (Y), and is not in spatial communication with either of said second pin holes (45).

6. The lightweight drive chain as claimed in Claim 1, **characterized in that** each of said pins (22) is tubular.

7. The lightweight drive chain as claimed in Claim 1, **characterized in that** each of said second pin holes (45) is defined by a second hole periphery (451), each of said inner chain plates (4) further having a pair of annular flanges (47) protruding from said second inner surface (42) at said second hole periphery (451) of a respective one of said second pin holes (45).

8. The lightweight drive chain as claimed in Claim 7, further **characterized by** a plurality of tubular rollers (21), each of which is sleeved rotatably on a confronting pair of said annular flanges (47) of a corresponding parallel pair of said inner chain plates (4).

9. The lightweight drive chain as claimed in Claim 1, **characterized in that** each of said first end portions (33) is formed with a reinforcing rib (331) that protrudes from said first outer surface (32) and that is radially offset from said first pin hole (35).

10. The lightweight drive chain as claimed in Claim 9, **characterized in that** said reinforcing rib (331) forms an acute angle (α) with respect to said first longitudinal axis (X), said acute angle(α) being 45 degrees.

11. The lightweight drive chain as claimed in Claim 1, **characterized in that** said first connecting portion (34) is formed with an inclined primary reinforcing (341) ridge that protrudes from said first outer surface (32) and that is inclined with respect to the first longitudinal axis (X).

12. The lightweight drive chain as claimed in Claim 11, **characterized in that** said first connecting portion (34) is further formed with an inclined secondary reinforcing ridge (342) that crosses said primary reinforcing ridge (341) and that protrudes from said first outer surface (32) at a distance less than that of said primary reinforcing ridge (341).
